# EUROPEAN PATENT SPECIFICATION

(11) **EP 2 355 368 B1**
(45) Date of publication and mention of the grant of the patent: **27.03.2013**
(21) Application number: 10290045.3
(22) Date of filing: 29.01.2010
(51) Int. Cl.: H04B 5/00

(54) **Telecommunication component and wireless communication system for coupling a cellular mobile telecommunication device to an NFC terminal**
Telekommunikationskomponente und drahtloses Kommunikationssystem zur Kopplung einer zellularen mobilen Telekommunikationsvorrichtung an ein NFC-Endgerät
Composant de télécommunication et système de communication sans fil pour coupler un dispositif de télécommunication mobile cellulaire à un terminal NFC

(43) Date of publication of application: 10.08.2011
(73) Proprietor: Morpho Cards GmbH, 24220 Flintbek (DE); STMicroelectronics (Rousset) SAS, 13790 Rousset (FR); Telenor ASA, 1331 Fornebu (NO)
(72) Inventor: Cricco, Remy, 13180 Gignac La Nerthe (FR); Rizzo, Pierre, 13100 Aix en Provence (FR); Brede, Steinar, 7048 Trondheim (NO)
(74) Representative: Richardt Patentanwälte GbR

(56) References cited:
- WO-A1-2006/137740
- US-A1- 2007 297 356
- HEIKKI AILISTO ET AL: "Physical browsing with NFC technology", INTERNET CITATION, 1 August 2007 (2007-08-01), pages 1-72, XP002586911, Retrieved from the Internet: URL:http://www.vtt.fi/inf/pdf/tiedotteet/2 007/T2400.pdf [retrieved on 2010-06-10]

## Description

### Field of the Intention

The present invention relates to the field of cellular mobile telecommunication, and more particularly to the coupling of a cellular mobile telecommunication device, such as a so called cell phone, to a NFC terminal.

### Background and related art

Cellular mobile telecommunication devices that enable the use of telecommunication services provided by a cellular mobile telecommunication network, such as a GSM or UMTS network, are as such known. Such cellular mobile telecommunication devices can be implemented as so called cellular phones, smart phones or the like. It is also known from the prior art that cellular mobile telecommunication devices have an integrated chip card reader for reading a so called SIM card or USIM card.

Examples of related prior art include WO 2006137740 which discloses a mobile phone with an RFID reader and WLAN transmitter integrater on a SIM card.

US 2008/0081631 A1 shows a cell phone having integrated near field communication (NFC) and wireless local area network (WLAN) interfaces.

US 2007/0297356 discloses frequency conversion methods and systems for a transceiver for Bluetooth and near field communication. It is an object of the present invention to provide a communication component, a wireless communication system and a method for coupling a cellular mobile telecommunication device to an NFC terminal.

Embodiments of the present invention are particularly advantageous as the communication component enables to couple a legacy cell phone or an inexpensive type of cell phone that has only an air interface to the cellular mobile telecommunication network but no additional wireless communication interface to an NFC terminal. As a consequence the user of the cell phone has access to various NFC applications using his or her cell phone that does not have an integrated NFC or other short range interface. This is made possible by the insertion of a telecommunication chip card, e.g. a SIM card or a secure MicroSD card that has an integrated WLAN transceiver and a communication component that converts WLAN signals to NFC signals and vice versa.

A 'telecommunication chip card' as understood herein is any integrated circuit chip card that has storage for storing access data that enable to couple a cellular telecommunication device to a respective network when the telecommunication chip card is inserted in a chip card reader of the telecommunication device. The telecommunication chip card may have an integrated processor for execution of an application program. In the case of a SIM card or a USIM card the processor may be operable to execute a set of commands that constitute the SIM application toolkit. In particular files, such as program files or application programs, in a SIM or USIM card can be remotely managed by means of over the air (OTA) technology; in particular OTA enables to download application programs dynamically via the air interface of the cell phone from an OTA-server that is coupled to the digital cellular mobile telecommunication network.

The term 'near field communication' or NFC as understood herein is a short-range high frequency wireless communication technology that enables the exchange of data between devices over about a 10 cm distance. NFC enables communication such as with existing ISO/IEC14443, ISO 18092, ETSI TS 102613 Single Wire Protocol (SWP) Standard, ETSI TS 102622 Host Controller Interface (HCI) Standard smart cards and terminals and is thereby compatible with existing contactless infrastructure already in use for public transportation and payment, such as for electronic ticketing, mobile payment, mobile commerce or electronic key applications.

Instead of a WLAN another far field telecommunication standard can be utilized for the communication between the communication component and the telecommunication chip card of the cellular mobile telecommunication device. The term 'far field communication' as understood herein encompasses any telecommunication method that utilizes the electromagnetic far field for exchanging information. In particular Bluetooth, Zigbee can be used for the far field communication.

In accordance with an embodiment of the invention, the communication component is a chip card, in particular a so called smart card, into which the various functional components of the communication component are integrated. Alternatively, the communication component has an integrated reader for a separate security token, such as a SIM card reader for inserting a SIM card into the communication component.

In accordance with an embodiment of the invention, the communication component or the security token has processor means for execution of an application program module. The application program module may be interoperable with another application program module that is executed by the telecommunication chip card of the cellular mobile telecommunication device. In particular, the application program module of the communication component or the security token may remotely control the application program module of the cellular mobile telecommunication device for distributed processing and/or for obtaining access to functionalities of the telecommunication chip card and/or the cellular mobile telecommunication device that are not available in the communication component, such as the user interface of the cellular mobile telecommunication device and its air interface.

In accordance with an embodiment of the invention, the communication component has a SIM card reader into which a single wire protocol (SWP) SIM card is inserted. Thereby the security of the wireless communication system can be improved. For example, an asymmetric cryptographic key pair can be stored both in the SWP SIM card of the communication component and the WLAN SIM card of the cellular mobile telecommunication device for authentication and/or encryption of the communication between the communication component and the cellular mobile telecommunication device and/or the NFC terminal.

In accordance with an embodiment of the invention the communication component is a sticker or label. The sticker carries the various elements of the communication component, such as the WLAN transmitter/receiver (transceiver), the NFC transceiver and the converter means and may be attached to any object. For example, the user may attach the sticker to the back of the cellular phone, to his or her purse or another object that the user usually carries with him or her.

In accordance with an embodiment of the invention, the sticker has a self-adhesive foil to which the WLAN transceiver, the NFC transceiver and the converter means are attached. In addition, a battery may be attached to the self-adhesive foil. The WLAN transceiver, the NFC transceiver and the converter means may be implemented in a single integrated circuit chip. The battery can be a foil battery such that the communication component is formed as a substantially flat structure that has a maximum thickness of less than 5 mm. Preferably the maximum thickness of the sticker is below 4 mm or 3 mm. This has the advantage of maximum convenience as use of the object to which the sticker is attached is not obstructed in any way by the presence of the attached sticker.

In accordance with an embodiment of the invention, the communication component is formed as a keyring pendant. The user may add the keyring pendant to his or her keyring or a fob, i.e. a chain or ribbon by which the keyring pendant is attached to a waistcoat or another item of clothing.

In accordance with an embodiment of the invention the communication component is a chip card, in particular a smart card.

In another aspect the present invention relates to a wireless communication system comprising a cellular mobile telecommunication device having an integrated chip card reader, a telecommunication chip card for insertion into the chip card reader, the telecommunication chip card having an integrated WLAN transceiver, a communication component, the WLAN transceiver of the communication component being operable to exchange the WLAN signals with the integrated WLAN transceiver of the telecommunication chip card.

In accordance with an embodiment of the invention, the telecommunication chip card executes an application program, such as an applet, in particular a JavaCard applet. The application program exchanges information with the NFC terminal using the integrated WLAN transceiver of the telecommunication chip card and the communication component.

In accordance with an embodiment of the invention, the application program, such as a JavaCard applet, can be downloaded to the cellular mobile telecommunication device from the cellular digital mobile telecommunication network. This can be implemented using over the air (OTA) technology.

For example, an OTA server is coupled to the cellular digital mobile telecommunication network. The OTA server provides the application program for transmission to the cellular mobile telecommunication device via the cellular mobile telecommunication network. The transmission of the application program can be implemented by means of a push or pull service.

Embodiments of the invention are particularly advantageous as the user can upgrade his or her existing cellular phone by replacing the phone's regular SIM card by a SIM card having an integrated WLAN transceiver. Depending on the user's requirements one or more application programs may then be downloaded via the cellular mobile telecommunication network and stored in the SIM card. In combination with an embodiment of the communication component of the invention the user is thus provided with the capability to use various NFC applications, such as electronic ticketing, payment applications and the like, without having to purchase a new cellular phone that has an integrated NFC interface.

In still another aspect the invention relates to a communication method for coupling a cellular mobile telecommunication device to an NFC terminal using a communication component, the method comprising the steps of: receiving a first WLAN signal carrying first information from the integrated WLAN transceiver of the telecommunication chip card of the cellular mobile telecommunication device by the communication component, generating a first NFC signal carrying the first information and sending the first NFC signal from the NFC transceiver of the communication component to the NFC terminal, receiving a second NFC signal from the NFC terminal by the NFC transceiver of the communication component, the second NFC signal carrying a second information, generating a second WLAN signal carrying the second information and sending the second WLAN signal from the communication component to the integrated WLAN transceiver of the telecommunication chip card.

In accordance with an embodiment of the invention, the telecommunication chip card has a processor executing an application, the processor being coupled to the integrated far field transceiver of the telecommunication chip card, the method further comprising: generating the first information by the application program and inputting the first information into the integrated far field transceiver for sending the first far field signal carrying the first information to the communication component, inputting the second information from the integrated far field transceiver into the processor for processing of the second information by execution of the application program.

In accordance with an embodiment of the invention, the method further comprises receiving the application program via an air interface of the cellular mobile telecommunication device from an OTA-server.

### Brief description of the drawings

In the following preferred embodiments of the invention will be described in greater detail by way of example only making reference to the drawings in which:
- Figure 1: shows a block diagram of an embodiment of a wireless communication system of the invention,
- Figure 2: is illustrative of a further embodiment of the invention,
- Figure 3: is a block diagram of a further embodiment of the communication component of the invention,
- Figure 4: shows a block diagram of a further embodiment of a wireless communication system of the invention.

### Detailed description

In the following like elements of the various embodiments are designated by identical reference numerals.

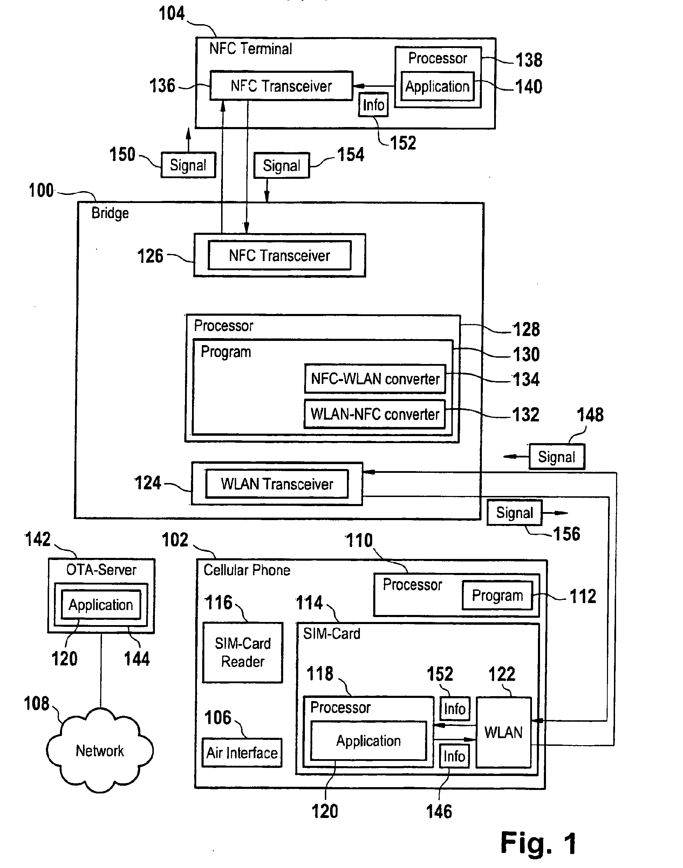

Fig. 1 shows a communication component 100 that serves as a communication bridge between a cellular phone 102, such as a GSM or UMTS phone, and an NFC terminal 104.

The cellular phone 102 has an air interface 106 that comprises an antenna and a transceiver for coupling the cellular phone 102 to a cellular mobile telecommunication network 108, such as a GSM or UMTS network.

The cellular phone 102 has at least one processor 110 for execution of program instructions 112. The operation of the cellular phone 102 is controlled by execution of the program instructions 112, in particular regarding the exchange of voice data and other data via the air interface 106 and regarding the data exchange with a SIM card 114 that is inserted into a SIM card reader 116 of the cellular phone 102. Further, a user interface to a user of the cellular phone 102 is provided by means of the program instructions 112 that can receive user commands and data such as from a keyboard of the cellular phone 102 and control a display of the cellular phone 102 for displaying information.

The SIM card 114 comprises processor 118 for execution of at least one application program 120. In one embodiment, the application program 120 can be implemented by an applet, in particular a JavaCard applet.

Furthermore, the SIM card 114 comprises an integrated WLAN transceiver 122 that is coupled to the processor 118 for exchanging information with the application program 120. The WLAN transceiver 122 is coupled to a WLAN antenna (not shown in the figures) that is forming an integral part of the SIM Card 114. The WLAN transceiver can be in compliance with IEEE 802.11. Alternatively the transceiver 122 can implement another standard such as Zigbee (IEEE 802.15). Alternatively other frequencies or protocols can be implemented by the transceivers 122 and 124, in particular Bluetooth,...

The communication component 100 comprises a WLAN transceiver 124 for exchanging WLAN signals with the WLAN transceiver 122 of the SIM card 114. In addition, the communication component 100 comprises an NFC transceiver 126 for exchanging NFC signals with the NFC terminal 104. The communication component 100 has a processor 128 for execution of program instructions 130 that implement a WLAN to NFC converter 132 as well as an NFC to WLAN converter 134.

The converter 132 serves to convert a WLAN signal received by the WLAN transceiver 124 into an NFC signal carrying the same information and sending the NFC signal via the NFC transceiver 126 to the NFC terminal 104. Likewise, the converter 134 serves to convert an NFC signal received from the NFC terminal 104 by the NFC transceiver 126 into a WLAN signal carrying the same information as that received by the NFC signal and for sending the resultant WLAN signal via the WLAN transceiver 124 to the cellular phone 102.

The NFC terminal 104 has an NFC transceiver 136 for exchanging the NFC signals with the NFC transceiver 126 of the communication component 100. Further, the NFC terminal 104 comprises at least one processor 138 for execution of an application program 140. For example, the application program 140 implements an electronic ticketing application, a payment application or another NFC application that is made accessible to the user of the cellular phone 102 through the communication component 100.

In one implementation an OTA-server 142 is coupled to the network 108. The OTA-server has storage 144 for storing the application program 120 and for providing the application program 120 for transmission via the network 108 to the cellular phone 102.

For usage of the service provided by the application program 140 the following steps can be performed:
1. The SIM card 114 is inserted into the SIM card reader 116 of the cellular phone 102. It is to be noted that the cellular phone 102 does not require a communication interface in addition to the air interface 106 as such an additional communication interface is provided by the SIM card 114 that has the integrated WLAN transceiver 122. The WLAN transceiver 122 has the advantage that it uses an electromagnetic far field for exchanging WLAN signals with the WLAN transceiver 124 of the communication component 100 which are not shielded by conducting components of the cellular phone 102.
2. Depending on the implementation the application program 120 is already stored on the SIM card 114 when it is delivered to the user of the cellular phone 102. Alternatively the application program 120 is provided to the SIM card 114 from the OTA-server 142 by transmitting the application program 120 via the network 108 and the air interface 106 of the cellular phone 102 to the SIM card 114. This provides an utmost degree of flexibility to the user as the user can select the application program 120 depending on his or her requirements, download an upgrade of the application program 120 from the OTA-server 142 or download additional application programs from the OTA-server 142 for using various NFC applications. In particular, the application programs provided by the OTA-server 142 may be JavaCard applets that are stored on the SIM card 114 for execution by the processor 118.
3. For use of the services provided by the application program 140, the application program 120 generates information such as in response to a user input received via a keyboard of the cellular phone 102. The information 146 is transmitted from the processor 118 to the integrated WLAN transceiver 122. In response, the integrated WLAN transceiver 122 generates a WLAN signal 148 that is received by the WLAN transceiver 124 of the communication component 100.
4. In response to receipt of the WLAN signal 148 the converter 132 of the communication component 100 generates an NFC signal 150 that contains the information 146 carried by the WLAN signal 148. The resultant NFC signal 150 is transmitted from the NFC transceiver 126 to the NFC transceiver 136 of the NFC terminal 104. The NFC transceiver 136 enters the information 146 carried by the signal 150 into the application program 140 for processing. As a result of the processing, the application program 140 outputs information 152 to the NFC transceiver 136. In response the NFC transceiver 136 generates an NFC signal 154 that is received by the NFC transceiver 126. In response to receipt of the NFC signal 154 the converter 134 generates a WLAN signal 156 that carries the information 152 received with the NFC signal 154. The WLAN signal 156 is received by the integrated WLAN transceiver 122 of the SIM card 114. The information 152 carried by the WLAN signal 156 is then forwarded from the WLAN transceiver 122 to the processor 114 for processing by the application program 120. As a result of the processing of the information 152 by the application program 120 the application program 120 may output data via the SIM card reader 116 for display on a display of the cellular phone 102. As a consequence bi-directional information exchange between the cellular phone 102 and the NFC terminal 104 is enabled.

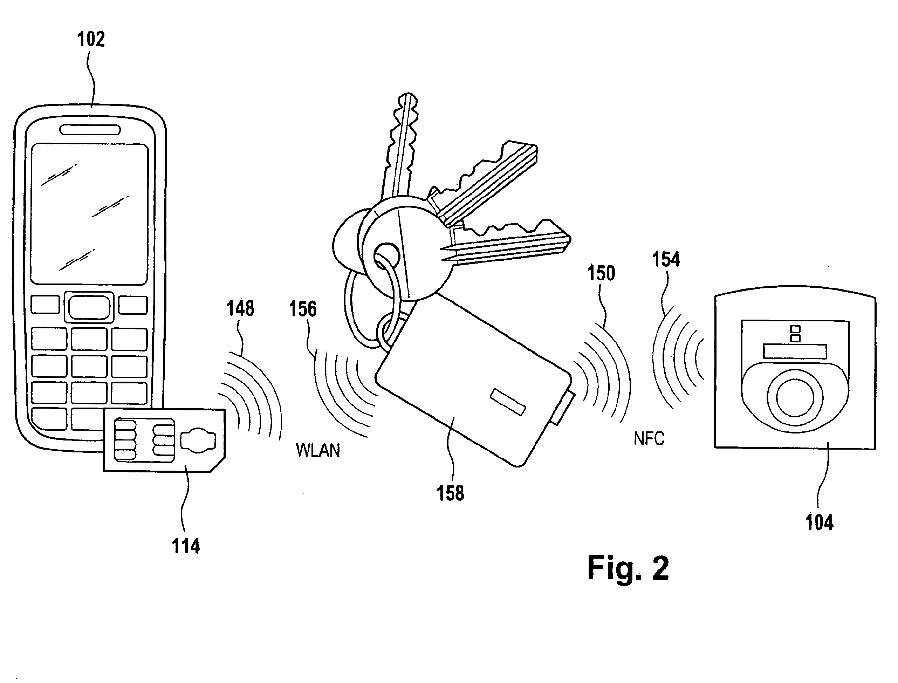

Fig. 2 illustrates an embodiment of the invention, where the communication component 100 is implemented as a keyring pendant 158 that is carried by the user of the cellular phone 102.

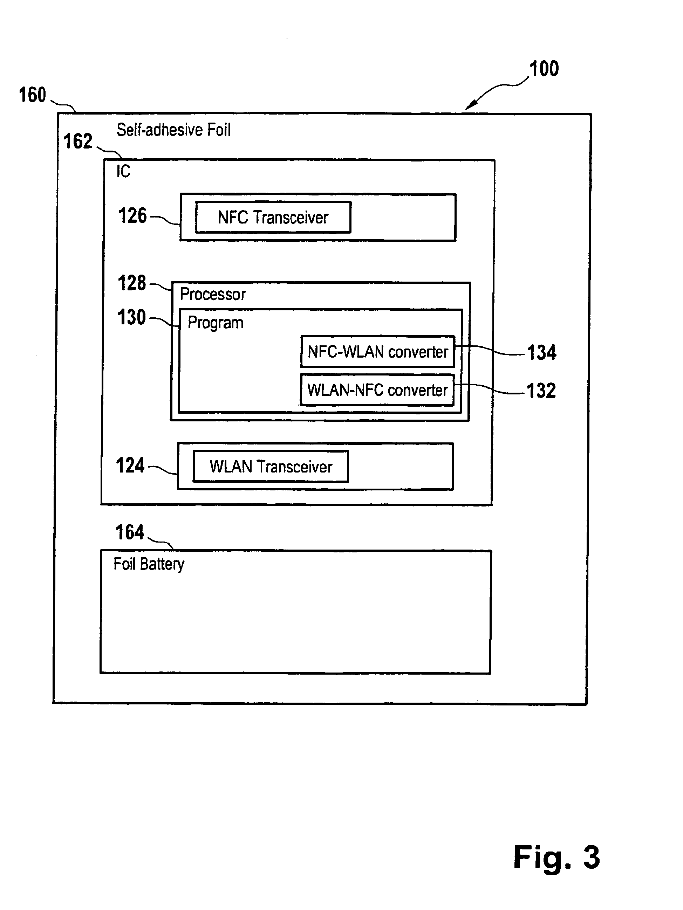

Fig. 3 illustrates a further embodiment of the communication component 100. In the embodiment considered here the communication component 100 comprises a self-adhesive foil 160 that carries the NFC transceiver 126, the processor 128 and the WLAN transceiver 124. These components can be integrated into one integrated electronic circuit chip 162 that is attached to the self-adhesive foil 160.

In addition, foil battery 164 can be attached to the self-adhesive foil 160 in order to provide a power supply to the integrated circuit 162.

Due to the self-adhesive foil 160 and the foil battery 164 the communication component 100 has a flat form with a maximal thickness of not more than 5 mm, such as below 4 mm or 3 mm. The self-adhesive foil 160 can be attached to an object carried by the user of the cellular phone 102 or to the cellular phone 102 itself.

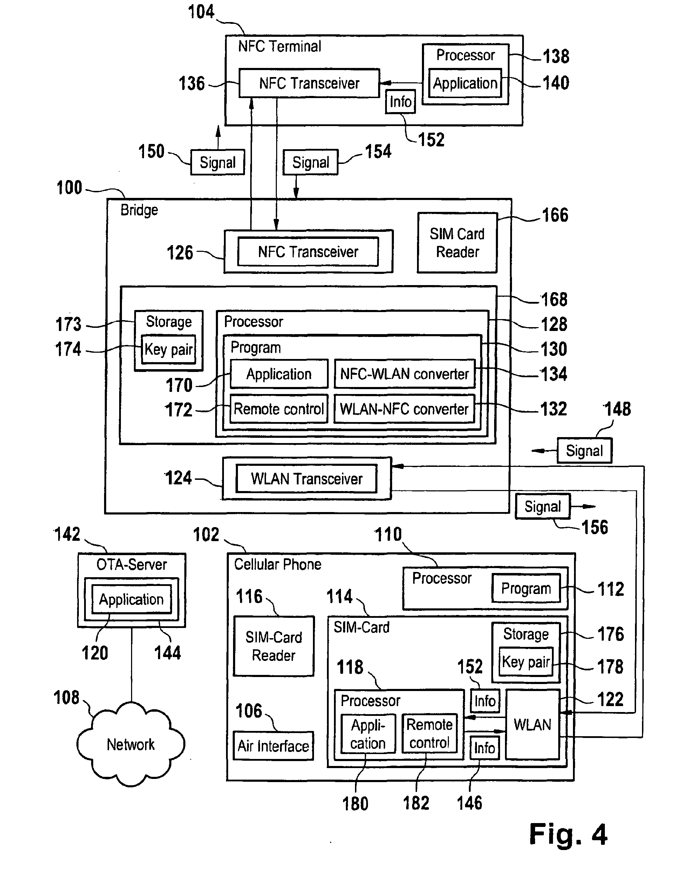

Fig. 4 shows a further embodiment of the communication component 100. In the embodiment considered here the communication component 100 comprises a reader for a security token, such as a SIM card reader 166, into which a security token, such as a SIM card 168, is inserted. The SIM card 168 comprises the processor 128 for execution of an application program module 170 and a remote control program module 172.

The processor 128 may also serve for implementation of the converters 132 and/or 134. Alternatively, the converters 132 and/or 134 are provided by an additional processor (not shown in the Fig.) of the communication component 100.

The SIM card 168 has storage 172 for storing a symmetric key or an asymmetric cryptographic key pair 174. The SIM card 168 can be a SWP SIM card providing a secure environment for execution of the application program module 170. For example, the SIM card 168 can be implemented as a tamper-proof module for protecting the application program module 170 and/or other functional components of the SIM card 168 against tampering or fraudulent manipulations.

The SIM card 168 can be implemented as a slave of the WLAN transceiver 124 through an ISO 7816 physical link or another link such as GPIO, I2C, SPI. Further, the SIM card 168 can be implemented as a master device through a single wire protocol (SWP) / host controller interface (HCI) link of the NFC transceiver 126.

In the embodiment considered here the SIM card 114 has storage 176 for storing at least one cryptographic key, such as a symmetric key matching a symmetric key being stored in the storage 173 or another asymmetric cryptographic key pair 178. The processor 118 of the SIM card 114 serves for execution of an application program module 180 and a remote control program module 182.

The application program modules 170 and 180 are interoperable as well as the remote control program modules 172 and 182. The remote control program module 172 is operable to receive a request from the application program module 170 which it forwards by means of WLAN transceiver 124 to the SIM card 114 such that the execution of the application program module 180 is invoked through the intermediary of the remote control program module 182. This enables to implement an application in a distributed way, such as by implementing a portion of the program logic in the application program module 170 and by implementing another portion of the program logic in the application program 180. This provides a higher degree of security against manipulations, in particular if the WLAN communication between the communication component 100 and the SIM card 114 is secured by means of the key pairs 174 and/or 178, such as by a secure messaging method.

Furthermore, this has the advantage of providing access of the application program module 170 to resources of the cellular phone 102, such as the display, keyboard and the air interface 106 for user interaction or sending a message, such as an SMS, via the air interface 106.

In accordance with embodiments of the invention the communication component 100 may implement various modes of operation:

**First mode:** in the first mode the communication component 100 interoperates with the NFC terminal 104 in an autonomous way without involvement of the cellular phone 102. In this mode the application program module 170 exchanges the information with the application program 140 of the NFC terminal 104 through the NFC interface provided by the NFC transceivers 126 and 136 without involvement of the cellular phone 102.

**Second mode:** in this mode the communication component 100 operates as a relay or bridge between the NFC terminal 104 and the SIM card 114 of the cellular phone 102 with or without involvement of the application program module 170. Depending on the implementation the application program module 170 is not executed in this mode; in this instance the communication component 100 may operate as described with respect to the Fig. 1 embodiment.

**Third mode:** in this mode both the application program module 170 and the application program module 180 are executed. For example, the application program module 170 receives information 152 from the application program 140 that is executed by the processor 138 of the NFC terminal 104, i.e. the information 152 is received by the NFC transceiver 126. From the NFC transceiver 126 the information 152 is input into the SIM card 168 via the SIM card reader 166 for processing by the application program module 170. The application program module 170 may transform the information 152, add additional information to the information 152 and/or generate a request to be executed by the application program module 180 of the SIM card 114 using the information 152.

The information 152 as it may have been modified, amended or transformed by the application program module 170 is output by the SIM card 168 via the SIM card reader 166 and transmitted by means of the WLAN signal 156 to the SIM card 114. In addition, the request that is generated by the application program module 170 is entered into the remote control program module 172. In response to the request the remote control program module 172 starts a session, such as a SIM toolkit proactive session, that is forwarded to the SIM card 114 through the WLAN transceiver 124 via the SIM card reader 166. As a consequence the session started by the remote control program module 172 is executed by the SIM card 114 when the remote control program module receives a respective signal that indicates the session started by the remote control program module 172.

For example, the application program module 170 generates a request for sending an SMS or display a text message, such as for requesting a user to enter a personal identification number (PIN). This request is communicated through the intermediary of the remote control program module 172 and the remote control program module 180 to the SIM card 114 for execution, such that the requested SMS is sent out by the cellular phone 102 or the requested text message is displayed on a display of the cellular phone 102, such as for prompting a user to enter a PIN, respectively.

The response to this request, such as the PIN that has been entered by the user into the cellular phone 102, is communicated back to the SIM card 168 such as for authentication of the user vis-à-vis the SIM card 168. Preferably the PIN is encrypted using the public key of the key pair 174 and signed using the private key of the key pair 178 for protecting of the transmission of the PIN from the cellular phone 102 to the SIM card 168.

In accordance with an embodiment of the invention, the SIM card 168 is a SWP SIM card for execution of the contactless/secure application program module 170. The application program module 170 is a slave of the WLAN transceiver 124 with which it communicates via the SIM card reader 166 such as through an ISO 7816 physical link or another link such as GPIO, I2C or SPI. The application program module 170 may be a master of the NFC transceiver 126 with which it communicates through SWP/HCI (ETSI).

### List of Reference Numerals

| | |
|---|---|
| 100 | Communication component |
| 102 | Cellular phone |
| 104 | NFC terminal |
| 106 | Air interface |
| 108 | Network |
| 110 | Processor |
| 112 | Program instructions |
| 114 | SIM card |
| 116 | SIM card reader |
| 118 | Processor |
| 120 | Application program |
| 122 | WLAN transceiver |
| 124 | WLAN transceiver |
| 126 | NFC transceiver |
| 128 | Processor |
| 130 | Program instructions |
| 132 | Converter |
| 134 | Converter |
| 136 | NFC transceiver |
| 138 | Processor |
| 140 | Application program |
| 142 | OTA-server |
| 144 | Storage |
| 146 | Information |
| 148 | WLAN signal |
| 150 | NFC signal |
| 152 | Information |
| 154 | NFC signal |
| 156 | WLAN signal |
| 158 | Keyring pendant |
| 160 | Foil |
| 162 | Integrated circuit |
| 164 | Foil battery |
| 166 | SIM card reader |
| 168 | SIM card |
| 170 | Application program module |
| 172 | Remote control program module |
| 173 | Storage |
| 174 | Key pair |
| 176 | Storage |
| 178 | Key pair |
| 180 | Application program module |
| 182 | Remote control program module |

## Claims

1. A wireless communication system comprising:
- a cellular mobile telecommunication device (102) having an integrated chip card reader (116),
- a telecommunication chip card (114) for insertion into the chip card reader, the telecommunication chip card having an integrated far field transceiver (122), the far field transceiver being a WLAN transceiver,
- an NFC terminal (104),
- a communication component (100) comprising:
o a far field transceiver (124) for exchanging far field signals, the far field transceiver being a WLAN transceiver for exchanging WLAN signals,
o an NFC transceiver (126) for exchanging NFC signals, and
o a reader (166) into which a security token is inserted, the security token being a SIM card (168), the security token having a storage (172) for storing a symmetric key or an asymmetric cryptographic key pair (174) for authentication and encryption of the communication between the communication component and the cellular mobile telecommunication device and the NFC terminal, the NFC transceiver (126) of the communication component being operable to exchange the NFC signals (150, 154) with the NFC terminal,
the communication component (100) further comprising first processor means (128) for execution of a first application program module (170) and first remote control means (172), the first processor means (128) implementing converter means (132, 134) for converting a received far field signal (148) to an NFC signal (150) and for converting a received NFC signal (154) to a far field signal (156),
the telecommunication chip card (114) comprising second processor means (118) for execution of a second application program module (180) and second remote control means (182),
the NFC terminal (104) comprising at least one third processor mean (138) for execution of a third application program (140),
the first application program module (170) being adapted for receiving information (152) from the third application program (140) of the NFC terminal (104),
the SIM card (168) being adapted for receiving the information (152) via the SIM card reader (166) for processing by the first application program module (170),
the first application program module (170) being further adapted for generating a request to be executed by the second application program module (180) of the SIM card (114) using the information (152), the request comprising requesting a user to enter a personal identification number (PIN), and for communicating the request by using the first remote control means (172) and the second remote control means (182) to the SIM card (114) for execution,
the cellular phone (102) being adapted for sending to the SIM card (168) the PIN being entered by the user into the cellular phone (102), with the PIN being encrypted using the public key of the key pair (174) and signed using a private key of a key pair (178) of the SIM card (114) for protecting of the transmission of the PIN from the cellular phone (102) to the SIM card (168).

2. The wireless communication system of claim 1, the cellular mobile telecommunication device having a cellular transceiver (106) for coupling the cellular mobile telecommunication device to a cellular digital mobile telecommunication network (108), the cellular transceiver being operable to receive the second application program module (120) and the cellular mobile telecommunication device being operable to store the application program (120) on the telecommunication chip card (114).

3. The wireless communication system of claim 2, further comprising an OTA-server (142) being coupled to the digital mobile telecommunication network for sending the application program to the cellular mobile telecommunication device.

## Patentansprüche

1. Drahtloses Kommunikationssystem, aufweisend:
- eine zelluläre, mobile Telekommunikationsvorrichtung (102) mit einem integrierten Chipkartenleser (116),
- eine Telekommunikations-Chipkarte (114) zum Einführen in den Chipkartenleser, wobei die Telekommunikations-Chipkarte einen integrierten Fernfeld-Transceiver (122) aufweist, wobei der Fernfeld-Transceiver ein WLAN-Transceiver ist,
- ein NFC-Endgerät (104),
- eine Kommunikationskomponente (100), die aufweist:
° einen Fernfeld-Transceiver (124) zum Austauschen von Fernfeldsignalen, wobei der Fernfeld-Transceiver ein WLAN-Transceiver zum Austauschen von WLAN-Signalen ist,
° einen NFC-Transceiver (126) zum Austauschen von NFC-Signalen, und
° einen Leser (166), in den ein Sicherheits-Token eingeführt wird, wobei der Sicherheits-Token eine SIM-Karte (168) ist, der Sicherheits-Token einen Speicher (172) zum Speichern eines symmetrischen Schlüssels oder eines asymmetrischen kryptographischen Schlüsselpaars (174) für die Authentifizierung und Verschlüsselung der Kommunikation zwischen der Kommunikationskomponente und der zellulären, mobilen Telekommunikationsvorrichtung und dem NFC-Endgerät aufweist, wobei der NFC-Transceiver (126) der Kommunikationskomponente so betätigt werden kann, dass er die NFC-Signale (150, 154) mit dem NFC-Endgerät austauscht,
wobei die Kommunikationskomponente (100) ferner eine erste Prozessoreinrichtung (128) zur Ausführung eines ersten Anwendungsprogrammmoduls (170) und eine erste Fernsteuereinrichtung (172) aufweist, wobei die erste Prozessoreinrichtung (128) eine Wandlereinrichtung (132, 134) implementiert, um ein empfangenes Fernfeldsignal (148) in ein NFC-Signal (150) umzuwandeln, und um ein empfangenes NFC-Signal (154) in ein Fernfeldsignal (156) umzuwandeln,
wobei die Telekommunikations-Chipkarte (114) eine zweite Prozessoreinrichtung (118), um ein zweites Anwendungsprogrammmodul (180) auszuführen, und eine zweite Fernsteuereinrichtung (182) aufweist,
wobei das NFC-Endgerät (104) mindestens eine dritte Prozessoreznrichtung (138) zum Ausführen eines dritten Anwendungsprogramms (140) aufweist,
wobei das erste Anwendunqsprogrammmodul (170) dafür ausgelegt ist, Informationen (152) vom dritten Anwendungsprogramm (140) des NFC-Endgeräts (104) zu empfangen,
wobei die SIM-Karte (168) dafür ausgelegt ist, die Informationen (152) zur Verarbeitung durch das erste Anwendungsprogrammmodul (170) über den SIM-Kartenleser (166) zu empfangen,
wobei das erste Anwendungsprogrammmodul (170) ferner dafür ausgelegt ist, eine Aufforderung, die vom zweiten Anwendungsprogrammmodul (180) der SIM-Karte (114) ausgeführt werden soll, unter Verwendung der Informationen (152) zu erzeugen, wobei die Aufforderung beinhaltet, dass ein Nutzer aufgefordert wird, eine persönliche Identifikationsnummer (PIN) einzugeben, und dafür, die Aufforderung unter Verwendung der ersten Fernsteuereinrichtung (172) und der zweiten Fernsteuereinrichtung (182) zur Ausführung an die SIM-Karte (114) zu übermitteln,
wobei das zelluläre Telefon (102) dafür ausgelegt ist, der SIM-Karte (168) die PIN zu schicken, welche vom Nutzer in das zelluläre Telefon (102) eingegeben wird, wobei die PIN unter Verwendung des öffentlichen Schlüssels des Schlüsselpaars (174) verschlüsselt wird und unter Verwendung eines privaten Schlüssels eines Schlüsselpaars (178) der SIM-Karte (114) signiert wird, um das Versenden des PIN vom zellulären Telefon (102) zur SIM-Karte (168) zu schützen.

2. Drahtloses Kommunikationssystem nach Anspruch 1, wobei die zelluläre mobile Telekommunikationsvorrichtung einen zellulären Transceiver (106) aufweist, um die zelluläre Mobiltelekommunikationsvorrichtung mit einem zellulären, digitalen Mobiltelekommunikationsnetz (108) zu verbinden, wobei der zelluläre Transceiver so betätigt werden kann, dass er das zweite Anwendungsprogrammmodul (120) empfängt, und die zelluläre Mobilkommunikationsvorrichtung in der Lage ist, das Anwendungsprogramm (120) auf der Telekommunikations-Chipkarte (114) zu speichern.

3. Drahtloses Kommunikationssystem nach Anspruch 2, ferner einen OTA-Server (142) aufweisend, der mit dem digitalen Mobiltelekommunikationsnetz verbunden ist, um das Anwendungsprogramm an die zelluläre mobil Telekommunikationsvorrichtung zu schicken.

## Revendications

1. Système de communication sans fil, comprenant :
- un dispositif de télécommunication mobile cellulaire (102) possédant un lecteur de carte à puce intégré (116),
- une carte à puce de télécommunication (114) destinée à être insérée dans le lecteur de carte à puce, la carte à puce de télécommunication possédant un émetteur-récepteur de champ lointain (122) intégré, l'émetteur-récepteur de champ lointain étant un émetteur-récepteur WLAN,
- un terminal NFC (104),
- un composant de communication (100) comprenant :
o un émetteur-récepteur de champ lointain (124) pour l'échange de signaux de champ lointain, l'émetteur-récepteur de champ lointain étant un émetteur-récepteur WLAN pour l'échange de signaux WLAN,
o un émetteur-récepteur NFC (126) pour l'échange de signaux NFC, et
o un lecteur (166) dans lequel est inséré un jeton de sécurité, le jeton de sécurité étant une carte SIM (168), le jeton de sécurité possédant une mémoire (172) pour stocker une clé symétrique ou une paire de clés cryptographiques asymétriques (174) pour l'authentification et l'encryptage de la communication entre le composant de communication et le dispositif de télécommunication mobile cellulaire et le terminal NFC, l'émetteur-récepteur NFC (126) du composant de communication étant conçu pour échanger les signaux NFC (150, 154) avec le terminal NFC,
- le composant de communication (100) comprenant en outre un premier moyen de processeur (128) pour l'exécution d'un premier module de programme d'application (170), ainsi qu'un premier moyen de contrôle à distance (172), le premier moyen de processeur (128) mettant en oeuvre des moyens de convertisseur (132, 134) pour convertir un signal de champ lointain reçu (148) en un signal NFC (150), et pour convertir un signal NFC reçu (154) en un signal de champ lointain (156),
- la carte à puce de télécommunication (114) comprend un deuxième moyen de processeur (118) pour l'exécution d'un deuxième module de programme d'application (180), ainsi qu'un deuxième moyen de contrôle à distance (182),
- le terminal NFC (104) comprenant au moins un troisième moyen de processeur (138) pour l'exécution d'un troisième programme d'application (140),
- le premier module de programme d'application (170) étant adapté pour recevoir des informations (152) du troisième programme d'application (140) du terminal NFC (104),
- la carte SIM (168) étant adaptée pour recevoir les informations (152) par le biais du lecteur de carte SIM (166), en vue du traitement par le premier module de programme d'application (170),
- le premier module de programme d'application (170) étant en outre adapté pour générer une requête à exécuter par le deuxième module de programme d'application (180) de la carte SIM (114) à l'aide des informations (152), la requête comprenant la saisie d'un numéro d'identification personnel (PIN) par un utilisateur, et pour communiquer la requête à la carte SIM (114) en vue de l'exécution, à l'aide du premier moyen de contrôle à distance (172) et du deuxième moyen de contrôle à distance (182),
- le téléphone cellulaire (102) étant adapté pour envoyer à la carte SIM (168) le code PIN saisi par l'utilisateur dans le téléphone cellulaire (102), avec le code PIN encrypté à l'aide de la clé publique de la paire de clés (174) et signée à l'aide de la clé prisée de la paire de clés (178) de la carte SIM (114), pour protéger la transmission du code PIN du téléphone cellulaire (102) à la carte SIM (168).

2. Système de communication sans fil selon la revendication 1, dans lequel le dispositif de communication mobile cellulaire possède un émetteur-récepteur cellulaire (106), pour accoupler le dispositif de communication mobile cellulaire avec un réseau de télécommunication mobile numérique cellulaire (108), l'émetteur-récepteur cellulaire étant conçu pour recevoir le deuxième module programme d'application (120), et le dispositif de communication mobile cellulaire étant conçu pour stocker le programme d'application (120) sur la carte à puce de télécommunication (114).

3. Système de communication sans fil selon la revendication 2, comprenant en outre un serveur OTA (142) accouplé avec le réseau de télécommunication mobile numérique, pour envoyer le programme d'application au dispositif de communication mobile cellulaire.
